Europäisches Patentamt

European Patent Office

Office européen des brevets

Veröffentlichungsnummer: **0 285 083**
**A2**

# EUROPÄISCHE PATENTANMELDUNG

(21) Anmeldenummer: 88105042.1

(22) Anmeldetag: 29.03.88

(51) Int. Cl.⁴: **G05D 23/24**

(30) Priorität: 02.04.87 DE 3711102

(43) Veröffentlichungstag der Anmeldung:
**05.10.88 Patentblatt 88/40**

(84) Benannte Vertragsstaaten:
**AT BE CH DE ES FR GB GR IT LI LU NL SE**

(71) Anmelder: **Deutsche Thomson-Brandt GmbH
Postfach 1307
D-7730 Villingen-Schwenningen(DE)**

(72) Erfinder: **Rilly, Gerard, Dr.-Ing.
Panoramaweg 6
D-7731 Unterkirnach(DE)**

(74) Vertreter: **Körner, Peter, Dipl.-Ing.
Deutsche Thomson-Brandt GmbH Patent-
und Lizenzabteilung Göttinger Chaussee 76
D-3000 Hannover 91(DE)**

(54) **Voreinstellbarer Widerstand.**

(57)
2.1 Ein voreinstellbarer Widerstand soll ferngesteuert wahlweise zwischen einem weiteren Widerstandswert und seiner Grundeinstellung umgeschaltet werden.

2.2 Erfindungsgemäß ist mit einer Anzapfung
des Widerstandes eine steuerbare Schalteranordnung verbunden, mittels der wenigstens ein weiterer
Widerstandswert einstellbar ist.

2.3 Die Erfindung ist besonders für elektronische Raumthermostaten geeignet, bei der zusätzlich
zur Normalbetriebsart auf eine Betriebsart
"Nachtabsenkung" und eine Betriebsart "Frostschutz" umgeschaltet werden soll.

EP 0 285 083 A2

## Voreinstellbarer Widerstand

Die Erfindung betrifft einen voreinstellbaren Widerstand, insbesondere für einen elektronischen Raumthermostaten, nach dem Oberbegriff des Anspruchs 1.

Voreinstellbare Widerstände dienen in elektronischen Geräten zur Festlegung eines Arbeitspunktes oder eines Betriebszustandes. Bekannt sind dabei mechanische und elektronische Ausführungen, die durch ein Betätigungsorgan eingestellt werden. Nachteilig ist, daß bei Einstellung eines anderen Widerstandswertes die vorherige Einstellung nur durch einen Speicher oder eine entsprechende Skala wiedergefunden werden kann. Es gibt Anwendungsfälle, in denen neben der Grundeinstellung auch ein zweiter oder weiterer Widerstandswert nach Bedarf eingestellt werden und später wieder auf Grundeinstellung eingenommen werden soll. Dieser Anwendungsfall ist z.B. bei einem elektronischen Raumthermostat gegeben, der neben der normalen Einstellung zusätzlich eine "Nachtabsenkung" und ggf. einen "Frostschutz" bietet. Die Einstellung dieser verschiedenen Betriebszustände soll dabei auch bei räumlich entfernt liegenden Geräten einfach und bequem durchgeführt werden können, ohne daß dazu eine Bedienung am Gerät selbst erforderlich ist.

Der Erfindung liegt deshalb die Aufgabe zugrunde, einen voreinstellbaren Widerstand zu - schaffen, mit dem ferngesteuert zwischen einem weiteren Widerstandswert und der Grundeinstellung gewählt werden kann.

Diese Aufgabe wird bei einem voreinstallbaren Widerstand nach dem Oberbegriff des Anspruchs 1 durch die im kennzeichnenden Teil angegebenen Merkmale gelöst.

Durch die fernsteuerbare Schalteranordnung kann über die Anzapfung oder den Anschluß des Widerstandes ein zusätzlicher Widerstand oder ein Nebenschluß zu einem Teilbereich des Widerstandes hergestellt werden, der den Widerstandswert in der gewünschten Weise verändert. Nach Öffnen des Schalters liegt wieder die Grundeinstellung vor. Der Vorteil der Erfindung besteht darin, durch ein gemeinsames Steuersignal gleichzeitig mehrere voreinstallbare Widerstände in dieser Weise einstellen zu können. In elektronischen Raumthermostaten als einem bevorzugten Anwendungsgebiet kann dies von einer Zentrale aus manuell oder automatisch erfolgen.

Weiterbildungen und vorteilhafte Ausführungsformen der Erfindung ergeben sich aus den Ansprüchen 2 bis 10, der weiteren Beschreibung sowie der Zeichnung, die ein Ausführungsbeispiel der Erfindung veranschaulicht.

In der Zeichnung zeigen:

Fig. 1 eine mit diskreten Bauelementen ausgeführte Schaltung in Verbindung mit einem elektronischen Raumthermostaten.

Fig. 2, 3 und 4 Prinzipschaltungen der mit der Schaltung gemäß Fig. 1 darstellbaren Betriebszustände.

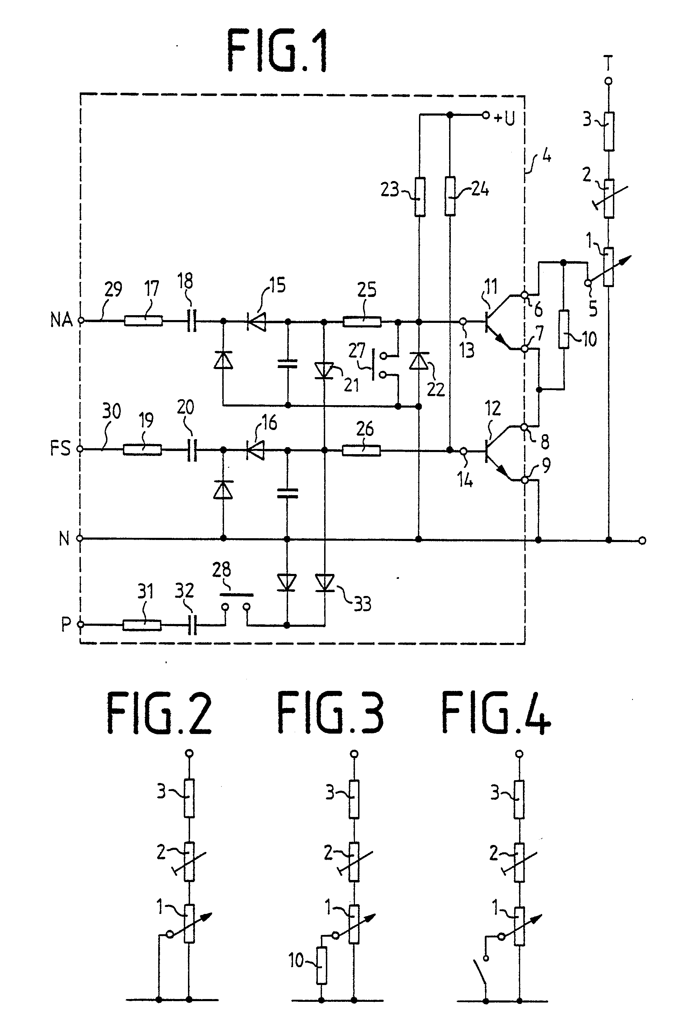

In Fig. 1 ist zwischen einer Klemme T und Bezugspotential N eine Reihenschaltung aus einem veränderbaren Widerstand 1, einem fest einstellbaren Widerstand 2 sowie einem temperaturabhängigen Widerstand 3 angeordnet. Der Gesamtwiderstand dieser Reihenschaltung gibt die Höhe eines Steuerstroms vor, der die Leistung eines Heizgerätes steuert. Der veränderbare Widerstand 1 besitzt eine Anzapfung 5, die mit einem ersten Ausgangsanschluß 6 einer fernsteuerbaren Schalteranordnung 4 verbunden ist. Die fernsteuerbare Schalteranordnung 4 umfaßt als aktive Schalter einen ersten elektronischen Schalter 11 mit einem ersten Ausgangsanschluß 6 und einem zweiten Ausgangsanschluß 7 und einen zweiten elektronischen Schalter 12 mit einem dritten Ausgangsanschluß 8 und einem vierten Ausgangsanschluß 9. Der zweite und dritte Ausgangsanschluß 7,8 sind untereinander verbunden, während der vierte Ausgangsanschluß 9 mit Bezugspotential N verbunden ist. Zwischen dem ersten Ausgangsanschluß 6 und dem zweiten Ausgangsanschluß 7 befindet sich ein zusätzlicher Widerstand 10.

Die als NPN-Transistoren 11;12 ausgebildeten elektronischen Schalter besitzen Steuereingänge 13;14, von denen ein erster Steuereingang 13 über einen Widerstand 25, eine erste Gleichrichterschaltung 15 sowie eine Serienschaltung aus einem Vorwiderstand 17 und einem Kondensator 18 mit einer ersten Steuerleitung 29 verbunden ist und von denen ein zweiter Steuereingang 14 über einen Widerstand 26 und einen zweiten Gleichrichter 16 sowie eine Serienschaltung aus einem Vorwiderstand 19 und einem Kondensator 20 mit einer zweiten Steuerleitung 30 verbunden ist. Der erste Steuereingang 13 liegt außerdem über einen Widerstand 23 und der zweite Steuereingang 14 über einen Widerstand 24 an einem positiven Potential +U. Die erste Steuerleitung 29 endet an einer Klemme NA für den Betriebszustand "Nachtabsenkung" und die zweite Steuerleitung 30 an einer Klemme FS für den Betriebszustand "Frostschutz".

Die soweit beschriebene Schaltung arbeitet wie folgt: Im Normalzustand sind die Klemmen NA und FS potentialfrei. In diesem Falle wird dem Steuereingang 13 bzw. 14 über die Widerstände 23 und 24 ein Strom zugeführt, der die Transistoren 11 und 12 durchsteuert, die elektronischen Schalter also geschlossen hält. Die Anzapfung 5 des veränderbaren Widerstandes 1 wird in diesem Fall auf Massepotential N gezogen, wie es als Prinzipschaltung in Fig. 2 veranschaulicht ist.

Wird von einem Fernschaltgerät zwischen Nullpotential N und der Anschlußklemme NA Netzspannung gelegt, so erzeugt die erste Gleichrichterschaltung 15 ein negatives Potential, das über den Steuereingang 13 den Transistor 11 in den Sperrzustand überführt. Nun ist der Widerstand 10 eingeschaltet und liegt in Serie mit dem weiterhin durchgesteuerten Transistor 12 zwischen dem Anschluß 5 und Bezugspotential N und parallel zu einem Teilbereich des Widerstandes 1. Dieser Betriebszustand ist in Fig. 3 dargestellt.

Wird mittels des Fernschaltgeräts Netzpotential zwischen die Anschlußklemme FS und Bezugspotential gelegt, erzeugt die zweite Gleichrichterschaltung 16 negatives Potential, das den Transistor 12 über den Steuereingang 14 sperrt. Dieses Potential koppelt über die Diode 21 auch auf den anderen Steuereingang 13, wodurch auch der Transistor 11 gesperrt wird. Eine Begrenzungsdiode 22 verhindert, daß das Potential am ersten Steuereingang 13 zu hohe negative Werte, die evtl. zu einer Zerstörung des Transistors 11 führen können, annimmt. In diesem Betriebszustand ist die Verbindung zwischen dem Anschluß 5 und Bezugspotential N praktisch unterbrochen, was in Fig. 4 durch den geöffneten Schalter angedeutet ist.

Die beschriebene Schaltung hat den Vorteil, daß das Fernschaltgerät einfach Netzpotential auf die Anschlußklemmen NA oder FS legen kann und die erforderliche Steuerspannung durch die Gleichrichterschaltungen erzeugt wird. Durch die Kondensatoren 18, 20 wird eine Strombegrenzung und eine galvanische Entkopplung erzielt. Die Verbindungsleitungen zwischen dem Fernschaltgerät und den Anschlußklemmen NA und FS können in üblicher Hausinstallationstechnik ausgeführt und verlegt sein.

Zur individuellen Einstellung des einen oder anderen Betriebszustandes ist dem ersten Steuereingang 13 noch ein zusätzlicher Schalter 27 und dem zweiten Steuereingang 14 noch ein zusätzlicher Schalter 28 zugeordnet. Durch Schließen des Schalters 27 wird das Potential am Steuereingang 13 auf Bezugspotential N gezogen und der Transistor 11 gesperrt. Dadurch ist der Betriebszustand "Nachtabsenkung" eingestellt. Durch Schließen des Schalters 28 wird an der Klemme P anstehendes Netzpotential über eine Serienschaltung aus einem Widerstand 31 und einem Kondensator 32 sowie eine Gleichrichterschaltung 33 dem zweiten Steuereingang 14 und über die Diode 21 dem ersten Steuereingang 13 zugeführt. Beide Transistoren 11 und 12 öffnen in diesem Fall, wodurch die Betriebsart "Frostschutz" eingestellt ist.

## Ansprüche

1. Voreinstellbarer Widerstand, insbesondere für einen elektronischen Raumthermostaten, dadurch gekennzeichnet, daß mit einem Anschluß oder einer Anzapfung (5) des Widerstandes (1) eine fernsteuerbare Schalteranordnung (4) verbunden ist, mittels der wenigstens ein weiterer Widerstandswert einstellbar ist, wobei ein erster Ausgangsanschluß (6) der fernsteuerbaren Schalteranordnung (4) mit der Anzapfung (5) des Widerstandes (1) verbunden ist und ein zweiter Ausgangsanschluß (7) mit Bezugspotential (N) verbindbar ist.

2. Voreinstellbarer Widerstand nach Anspruch 1, dadurch gekennzeichnet, daß ein dritter Ausgangsanschluß (8) der fernsteuerbaren Schalteranordnung (4) mit dem zweiten Ausgangsanschluß (7) und ein vierter Ausgangsanschluß (9) mit Bezugspotential (N) verbunden ist und daß zwischen dem ersten (6) und dem zweiten Ausgangsanschluß (7) der fernsteuerbaren Schalteranordnung (4) ein zusätzlicher Widerstand (10) angeordnet ist.

3. Voreinstellbarer Widerstand nach Anspruch 1 oder 2, dadurch gekennzeichnet, daß die fernsteuerbare Schalteranordnung (4) einen ersten elektronischen Schalter (11) zwischen dem ersten (6) und dem zweiten Ausgangsanschluß (7) und einen zweiten elektronischen Schalter (12) zwischen dem dritten (8) und dem vierten Ausgangsanschluß (9) umfaßt.

4. Voreinstellbarer Widerstand nach Anspruch 3, dadurch gekennzeichnet, daß ein Steuereingang (13) des ersten elektronischen Schalters (11) über eine erste Gleichrichterschaltung (15) mit einer ersten Steuerleitung (29) und ein Steuereingang (14) des zweiten elektronischen Schalters (12) über eine zweite Gleichrichterschaltung (16) mit einer zweiten Steuerleitung (30) verbunden ist.

5. Voreinstellbarer Widerstand nach Anspruch 4, dadurch gekennzeichnet, daß seriell in jeder der Steuerleitungen (29;30) ein Vorwiderstand (17;19) und/oder ein Kondensator (18;20) angeordnet ist.

6. Voreinstellbarer Widerstand nach Anspruch 4 oder 5, dadurch gekennzeichnet, daß die zweite Gleichrichterschaltung (16) über eine Diode (21) auf den ersten Steuereingang (13) gekoppelt ist.

7. Voreinstellbarer Widerstand nach einem oder mehreren der Ansprüche 4 bis 6, dadurch gekennzeichnet, daß der erste Steuereingang (13) über eine Begrenzungsdiode (22) mit Bezugspotential (N) verbunden ist.

8. Voreinstellbarer Widerstand nach einem oder mehreren der Ansprüche 4 bis 7, dadurch gekennzeichnet, daß jeder Steuereingang (13;14) über einen Widerstand (23;24) an einem ersten Potential (+U) liegt und über einen weiteren Widerstand (26;26) mit der bei Ansteuerung ein entgegengesetztes Potential erzeugenden Gleichrichterschaltung (15;16) verbunden ist.

9.Voreinstellbarer Widerstand nach nach einem oder mehreren der Ansprüche 4 bis 8, dadurch gekennzeichnet, daß die beiden elektronischen Schalter als NPN-Transistoren (11;12) ausgebildet sind und daß das erste Potential ein positives Potential (+U) ist.

10. Voreinstellbarer Widerstand nach einem oder mehreren der Ansprüche 4 bis 9, dadurch gekennzeichnet, daß dem ersten (13) und/oder dem zweiten Steuereingang (14) ein zusätzlicher Schalter (27;28) zugeordnet ist.

# FIG.1

# FIG.2    FIG.3    FIG.4